Europäisches Patentamt

European Patent Office

Office européen des brevets

(19)

(11) Veröffentlichungsnummer: **0 076 781**
**A2**

(12) # EUROPÄISCHE PATENTANMELDUNG

(21) Anmeldenummer: 82810400.0

(22) Anmeldetag: 24.09.82

(51) Int. Cl.³: **B 01 D 39/20**
**C 22 B 9/02, C 22 B 21/06**

(30) Priorität: 06.10.81 CH 6411/81

(43) Veröffentlichungstag der Anmeldung:
13.04.83 Patentblatt 83/15

(84) Benannte Vertragsstaaten:
AT BE CH DE FR GB IT LI NL SE

(71) Anmelder: SCHWEIZERISCHE ALUMINIUM AG

CH-3965 Chippis(CH)

(72) Erfinder: Rieger, Wolfhart
zur Mühle
CH-8273 Buch(CH)

(72) Erfinder: Gauckler, Ludwig
Gemsgasse 11
CH-8200 Schaffhausen(CH)

(72) Erfinder: Maurer, Albert
Egelseeweg 4
CH-8240 Thayngen(CH)

(72) Erfinder: Kampfer, Konrad
Neuhausweg 20
CH-8240 Thayngen(CH)

(54) Filtermedium in Form eines stabilen porösen Körpers.

(57) Filtermedium in Form eines stabilen porösen Körpers aus gegenseitig durch eine Fremdphase oder durch Sintern gebundenen Körnern kugeliger Gestalt. Vorzugsweise werden hohlkugelige Körner aus Korund zu Filtermedien in Plattenform verarbeitet. Die Filtermedien werden zur Filtration von schmelzflüssigen Metallen vorzugsweise Aluminium, verwendet.

EP 0 076 781 A2

## Filtermedium in Form eines stabilen porösen Körpers

Die Erfindung betrifft ein Filtermedium in Form eines stabilen porösen Körpers aus gegenseitig gebundenen Körnern eines feuerfesten Materials.

Aus der US-PS 3 524 548 ist ein festes poröses Filter zur Filtration von geschmolzenem Aluminium bekannt, das aus einem gebrannten granulatähnlichen feuerfesten Material besteht, das von geschmolzenem Aluminium nicht angegriffen wird und das als Bindemittel ein glasartiges Material aufweist, das nicht mehr als 10% Kieselsäure enthält.

Als Granulat wird "fused alumina" oder "tabular alumina" genannt. Bei "fused"- oder "tabular alumina" handelt es sich um stückig gebrochenen Schmelzkorund. Dieses Material ergibt einen Filter mit relativ geringer Durchlässigkeit und Porosität. Durch die innere Struktur ist die Filterwirksamkeit und Filterkapazität beschränkt. Daher werden in der Praxis in der Regel Bündel von Filterrohren eingesetzt, um die gewünschten Durchflussmengen zu erreichen.

Aus der DE-OS 22 27 029 ist ferner bekannt geworden, dass derartige feste Filterelemente, beispielsweise in Form von Rohren, sehr zerbrechlich sind.

Es ist anzunehmen, dass diese Zerbrechlichkeit wenigstens teilweise ihre Begründung darin findet, dass beim Brennprozess unvermeidliche Spannungen und darauf folgend Bruchstellen entstehen. Weiter nachteilig ist das hohe Gewicht der Filterelemente nach der US-PS 3 524 548 und die dadurch bewirkte lange vorbereitende Aufheizzeit, bevor das schmelzflüssige Aluminium durch das Filterelement geleitet werden kann.

Zu Beginn der Filtration als auch während der Filtration müssen verhältnismässig grosse Druckunterschiede herrschen, um das schmelzflüssige Aluminium durch das Filterelement zu leiten.

Durch ein Filterelement ganz anderer Art wurde versucht, die Nachteile, wie grosse Druckunterschiede beim Filtrieren und beschränkte Filterkapazität, zu eliminieren. In der CH-PS 622 230 wird ein Filterelement beschrieben, das durch Imprägnieren eines Polyurethanschaumes mit einer keramischen Aufschlämmung, Abpressen der überschüssigen Aufschlämmung, Trocknen und Brennen hergestellt wird. Man erhält nach diesem Verfahren ein genaues Abbild des ursprünglichen organischen Schaumes in fester keramischer Form. Filterelemente dieser Art weisen eine hohe Filterkapazität und hohe Durchflussraten auf, dadurch lassen sie sich in Form einfacher Filterplatten verwenden. Diesen Filterelementen haftet der Nachteil an, dass sie in der Herstellung teuer sind.

Diese Filterelemente werden im Innern durch das Metall relativ schlecht benetzt und wirken auch deshalb mehrheitlich als Oberflächenfilter.

Aufgabe der Erfindung war es, die genannten Nachteile zu überwinden und ein Filtermedium zu schaffen, das leicht und in gleichbleibender Qualität hergestellt werden kann, das eine gute Filterwirksamkeit zeigt, durch das Filtrationsgut gut benetzt wird und über eine hohe Filterkapazität verfügt.

Erfindungsgemäss wird das mit einem Filtermedium nach Anspruch 1 erreicht.

Die Porosität bringt zum Ausdruck, wie gross die durchströmbaren Zwischenräume zwischen den Kugeln sind, bezogen auf das Gesamtvolumen eines Filterkörpers. Es wird als Zwischenraum nur der von den Rundungen der Körner begrenzte Raum bezeichnet, nicht aber allfällige Hohlräume im Innern der Körner. Die Porosität beträgt nach der Erfindung 5 bis 45 Vol.-%, zweckmässig 20 bis 40 Vol.-% und vorzugsweise 20 bis 35 Vol.-%.

Die erfindungsgemäss beanspruchte Permeabilität wird nach DIN-Norm 51 058 gemessen und im vorliegenden Fall im Mikroperm (µPm) ausgedrückt.

In vorliegender Erfindung betragen die Werte für die Permeabilität 2 bis 200 µPm, zweckmässig 2 bis 50 µPm und vorzugsweise 10 bis 30 µPm.

Die Körner aus feuerfestem Material weisen eine kugelige Gestalt oder annähernd kugelige Gestalt auf. Es können aber auch linsen- oder tropfenförmige Körner im erfindungsgemässen Sinne Anwendung finden. Je nach Herstellungsverfahren für derartige Körner können auch Mischungen verschiedener äusserer Formen erhalten werden. Die Körner können in voller oder vorzugsweise hohler Form vorliegen, wobei das feuerfeste Material in diesem Falle nur eine äussere Schale bildet, aber auch Gebilde, aufgebaut aus konzentrischen Schalen oder aus einer Vielzahl in sich offener oder geschlossener Zellen, die äusserlich durch eine Schale begrenzt sind, können Anwendung finden. Die Schalen müssen nicht dicht anschliessend sein, Porositäten oder Bruchstellen an den Schalen, aber auch willkürlich, durch Nachzerkleinern von kugeligen Gebilden geschaffene Körner können im Rahmen der Erfindung angewendet werden. Diese unterschiedlichen Kornarten, also vollkugelige, hohlkugelige oder gebrochenen Körner können in beliebigen Mengenverhältnissen gemischt werden. Als feuerfestes Material können die dem Fachmann geläufigen keramischen Materialien Anwendung finden. Die Auswahl richtet sich in erster Linie nach den Anfordernissen, die das zu filtrierende Gut bezüglich chemischer Stabilität, Wärmebeständigkeit, Festigkeit, Standzeit, Formbarkeit und Benetzbarkeit an den Filter stellt.

Unter die zur Anwendung gelangenden Materialien fallen metallische Oxide, wie Aluminiumoxide, beispielsweise als Korund, Böhmit, Hydrargillit, Bauxit, $SiO_2$, z.B. Perlit, Silikate, wie Mullit, Aeromullit, Silimanit oder Schamotte, dann Magnesiumoxide und Magnesiumsilikate, wie Steatit, Forsterit, Enstazit und Cordierit sowie Dolomit und die Mischungen genannter Oxide.

Als weitere metallische Oxide kommen Zirkonoxid, stabilisiert oder unstabilisiert in monokliner, tetragonaler und/oder kubischer Form; Zinnoxid mit oder ohne Dotierung; Aluminiumtitanat, Calciumsilikate, Calcium-Magnesium-Silikate Magnesium-Aluminium-Silikate, Zirkonsilikate, Calciumaluminate, Eisen-Chrom-Oxide, Aluminiumhydroxide, hochschmelzende Gläser, Borcarbid, Titancarbid, Titandiborid und Zirkoniumdiborid, Siliciumcarbid, Siliciumnitrid und seine Mischkristalle, sowie alle Spinelle und Perowskite in Betracht. Zu den feuerfesten Materialien sind in vorliegendem Fall auch Kohle, insbesondere in Form von Graphit, Koks oder Pech sowie ihre Mischungen zu zählen.

Zweckmässig enthalten die Körner aus feuerfesten Materialien Aluminiumoxide, vorzugsweise als Korund, Bauxit, Zirkonoxid oder Spinelle.

Gemische verschiedener Einzelkomponenten in unterschiedlichen Mengenverhältnissen können ebenfalls eingesetzt werden.

Kugelförmiges feuerfestes Material wird auf an sich bekannte Weise hergestellt. In der Regel erhält man kugelige Körner durch Rollgranulation, Sprühgranulation oder durch Verdüsen und anschliessende Sinterung.

Die Herstellung von Hohlkugeln ist ebenfalls bekannt.

Man kann einen Giessstrahl, beispielsweise aus flüssigem Korund, mit Pressluft oder Dampf verblasen. Dabei erhält man Hohlkugeln von bis zu 5 mm Durchmesser.

Man kann aber auch mittels eines Gasteilverfahrens einen treibfähigen Schlicker, der beispielsweise feinstteilige hochschmelzende Oxyde und Kohlendioxid abgebende Substanzen oder Wasserstoffperoxid als Treibmittel enthält, einer mechanischen Zerteilung, zweckmässig durch Austropfen und/ oder Verblasen, unterwerfen, und die entstehenden Tröpfchen trocknen und brennen.

In ähnlicher Weise kann man durch das bekannte Sol-Gel-Verfahren kugelförmige Körner herstellen.

Die Körner in kugeliger Gestalt weisen einen mittleren Durchmesser von 0,1 bis 30 mm auf. Die minimale Korngrösse soll 0,08 mm, die maximale Korngrösse 36 mm betragen.

Der zweckmässige mittlere Korndurchmessser beträgt 0,5 bis 8 mm, bei einer minimalen Korngrösse von 0,4 mm und einer maximalen Korngrösse von 9 mm.

Bevorzugt werden hohlkugelige Körner mit einem mittleren Durchmesser von 0,5 bis 5 mm angewendet.

Die Körner werden so untereinander gebunden, dass eine Verbindungsstelle zwischen zwei Körnern 0,1 bis 15%, zweckmässig 0,1 bis 5%, bevorzugt 0,5 bis 1,5 % der jeweiligen Kugeloberfläche beansprucht. Für kugelähnliche Körner, wie linsen- oder tropfenförmige Körner gilt sinngemäss der gleiche Prozentsatz deren äusserer Oberfläche. In allen Fällen bezieht sich die Angabe auf die rechnerische Oberfläche, die sich aus den mittleren Radien der Körner ergibt und nicht aus einer speziellen Mikrooberfläche, die sich aus der inneren Struktur des feuerfesten Materials ergeben kann.

Die Verbindung der Körner untereinander kann auf verschiedene Weise erfolgen. Die Körner können durch Fremdphase gebunden sein, die einen chemischen Charakter hat, wobei Phosphate, wie Aluminiumorthophosphat, Phosphorsäure, Magnesiumorthoborat, Aluminiumhydroxychlorid und/oder Kieselgel, zur Anwendung kommen.

Weiters können sie keramisch gebunden werden durch Gläser, beispielsweise Silikat- oder Borgläsern und/oder durch die Anwendung von glasbildenden Substanzen oder durch feinstteiliges oberflächlich aufgetragenes Material, das in seiner Zusammensetzung dem jeweiligen feuerfesten Material entspricht. Ein Beispiel für letztere Anwendungsform wären Korundkugeln, die mit einem feinstteiligen amorphen Aluminiumoxidpulver im Angström-Bereich beschichtet oder gemischt werden. Das feinstteilige Pulver sintert bei niedrigen Temperaturen als grobkörniges Pulver und vermag dadurch einen stofflich homogenen, festen, hochrefraktären Körper zu bilden.

Bei geeigneter Wahl von Körnern und Wahl eines keramischen Bindemittels kann ein stofflich homogener Körper auch dadurch erzielt werden, dass das Bindemittel und das feuerfeste Material in gegenseitige Reaktion treten und unter Bildung eines neuen hochrefraktären Materials eine hochrefraktäre Bindung bilden.

Es ist auch möglich, die Körner ohne Zusatz einer Fremdphase untereinander zu binden. Die Körner werden zur gegenseitigen Bindung lediglich zusammengesintert.

-8-

Die Filtermedien können entsprechend ihren Einsatzzwecken modifiziert werden.

Durch Beschichten der freien Kornoberfläche innerhalb des Filtermediums mit aktiviertem Aluminiumoxid, wobei das aktivierte Aluminiumoxid 3 bis 40 Gew.-% des gesamten Filtermediums beträgt, kann eine BET-Oberfläche von mindestens 10 m$^2$/g erreicht werden.

Das Filtermedium wird dazu zweckmässig mit einem Schlicker aus aktivierter ß oder δ - Tonerde, vorzugsweise γ -Tonerde als Rohmaterial, und einer geringen Menge Binder, beispielsweise kolloidale Kieselsäure, beschichtet und dann aktiviert.

Das Filtermedium kann mit Kohlenstoff beschichtet sein, wobei der Kohlenstoff 3 bis 40 Gew.-% des gesamten Filtermediums beträgt. Als Kohlenstoff können auch Koks, Pech und Graphit verstanden werden.

Eine weitere Möglichkeit besteht darin, die freien Kornoberflächen des Filtermediums allein oder zusätzlich zu anderen Behandlungen mit 0,5 bis 10 Gew.-%, bezogen auf das Gesamtgewicht des Filtermediums, mit einem Flussmittel für Metalle zu überziehen.

Als Flussmittel für Metalle dienen Salze wie Chloride oder Fluoride. Für Aluminium werden beispielsweise Na$_3$AlF$_6$, NaCl, KCl, CaF$_2$, AlCl$_3$, LiF oder deren Gemische angwendet.

Eine weitere vorteilhafte Ausführungsform liegt darin, dass im feuerfesten Material oder auf der Kornoberfläche keramische Fasern in Mengen von 0,01 bis 10 Gew.-% bezogen auf die Menge feuerfesten Materials enthalten sind und die keramischen Fasern mit wenigstens einem ihrer Faserenden über die Kornoberfläche herausragen.

Als keramische Fasern können Fasern aus Aluminiumoxiden, Aluminiumsilikaten, Zirkonoxiden, Bor, Siliciumcarbid oder Kohlenstoff eingesetzt werden. Im Rahmen vorliegender Erfindung, liegen auch alle natürlich vorkommenden Mineralfasern.

Der Filteraufbau kann auf verschiedene Weise ausgelegt werden. Es ist möglich, eine homogene Kornverteilung durch ein ganzes Filterelement hindurch aufrecht zu erhalten. Je nach Bedarf, Einsatzzweck und gewünschter Geometrie des Filterelementes wird man die Kornverteilung anpassen.

So kann das Filtermedium in oder senkrecht zur Filtrationsrichtung eine Abstufung des mittleren Durchmessers der Körner von fein nach grob oder von grob nach fein aufweisen.

Auch Abstufungen des mittleren Durchmessers der Körner von fein über grob zu fein oder von grob über fein zu grob sind frei wählbar.

Unter fein wird ein mittlerer Durchmesser der Körner von 0,1 bis 3 mm, unter grob von 3 bis 30 mm verstanden.

Die erfindungsgemässen Filtermedien werden hergestellt, indem man die kugeligen Körner homogen oder in Mischung von vollkugeligen, hohlkugeligen und/oder gebrochenen Körnern bezüglich ihres Durchmessers auswählt und gegebenenfalls mischt.

Durch die Kornverteilung kann die Porosität, also der Hohlraumanteil, der dem zu filtrierenden Material zur Verfügung steht, und damit auch die Permeabilität bestimmt werden.

Die Körner oder das Korngemisch werden, soweit vorgesehen, mit dem anorganischen Binder und einem beim Erwärmen verbackenden Mittel, zur Erzielung einer ausreichenden Grünfestigkeit, gemischt. Bevorzugt mischt man das chemische oder das keramische Bindemittel und das verbackende Mittel vor und mischt dann erst das feuerfeste Material zu.

Als verbackendes Mittel kommen organische Verbindungen, wie Carboxymethylcellulose, Polyvinylalkohole, Dextrin, Sulfitablauge usw. und anorganische Verbindungen, wie Monaluminiumphosphat, Calcium-aluminat, allein oder in Mischung untereinander, in Frage. In der Regel werden die verbackenden Mittel in wässriger Lösung verarbeitet.

Das verbackende Mittel hat die Aufgabe anfänglich den einzelnen Körnern bindende oder haftende Eigenschaften zu verleihen und bis zum endgültigen Brand aus dem Korngemisch eine formbare Masse zu bilden. In der Regel wird das Korngemisch, falls erforderlich, das Bindemittel und das verbackende Mittel mit Wasser auf an sich bekannte Weise, wie durch Kneten oder Rühren, angemischt.

Die Formgebung der gemischten Masse kann durch verschiedene Methoden, wie Stampfen, Einrütteln oder Giessen in eine Form, uniaxiales oder isostatisches Verpressen oder durch Extrudieren erfolgen. Eine Trocknung wird in Abhängigkeit von der Art und Zusammensetzung der verbackenden Mittel, in der Regel bei 80 bis 100°C, durchgeführt und ergibt eine gute Grünfestigkeit des Formkörpers nach spätestens 24 Stunden.

Der keramische Brand erfolgt in einem Gas- oder Elektroofen bei Temperaturen die von der Art der Bindung abhängig sind, sowie in Abhängigkeit der Zusammensetzung des feuerfesten Materials.

Für Filtermedien deren Korngemisch chemisch gebunden ist, sind Temperaturen von rund 1000°C ausreichend, für glasgebundene Korngemische müssen Temperaturen zwischen 700 und 1600°C eingehalten werden. Für den Fall, dass eine Selbstbindung durch Sintern angestrebt wird, richtet sich die Brenntemperatur nach den jeweils bekannten Sinterintervallen des feuerfesten Materials, erreicht maximal jedoch 2000°C.

Nach dem Verfahren der Erfindung beträgt in der Regel der Kalt-Kalt-Zyklus weniger als 48 Stunden. Unter Kalt-Kalt-Zyklus wird der Zeitraum verstanden, in dem der Grünkörper von Raumtemperatur auf die maximale Brenntemperatur erhitzt und wieder auf Raumtemparatur abgekühlt wird.

Diese kurze Brenndauer wird dadurch erklärlich, dass die kugeligen Körner innerhalb des Korngemisches keine oder nur geringe Wärmespannungen verursachen und so zu hochfesten gebrannten Körpern führen.

Das verbackende Mittel verflüchtigt sich oder verbrennt weitgehend rückstandslos spätestens während des Brennprozesses.

Der Aufbau des erfindungsgemässen Filtermediums entspricht bereits in grünem Zustand einer dichtesten Kugelpackung. Hierdurch wird eine Minimalisierung der bei der Sinterung von refraktären Stoffen üblicherweise auftretenden Schwindung aufgrund von Umlagerungen und Diffusionsprozessen erreicht.

Erfindungsgemäss hergestellte Filtermedien werden verwendet zur Filtration von schmelzflüssigen Metallen. In einer vorzugsweisen Ausführungsform werden die erfindunggemässen Filtermedien zum Filtrieren von schmelzflüssigem Aluminium oder Eisen verwendet.

Die Filtration von schmelzflüssigem Kupfer, Kupferlegierungen, Grauguss, Titan, usw. ist ebenfalls möglich.

Entsprechend dem Schmelzpunkt und der Filtrationstemperatur des Metalls muss die Wahl des feuerfesten Materials und des anorganischen Binders getroffen werden.

Es lassen sich Filterelemente in nahezu beliebiger Form und Grösse herstellen. Bei der die Verwendung von hohlkugeligen Körnern werden zudem relativ geringe spezifische Dichten erreicht, so dass auch grosse Filterelemente selbsttragend und thermowechselbeständig sind. Eine bevorzugte Anwendungsform liegt darin, dass das Filtermedium die Form einer Platte mit abgeschrägten Randflächen aufweist. Eine derartige Platte kann beispielsweise anstelle einer Filterplatte, wie sie in der schweizerischen Patentschrift 622 230 beschrieben ist, eingesetzt werden.

Neben Filterplatten sind auch Filterrohre, Filtertiegel und Filterblöcke leicht herzustellen.

Beispiel

75 kg Hohlkugelkorund der Körnung 1,6 - 2,0 mm wurden in einem Intensivmischer mit einem Gemenge von 15 kg Glasurrohmischung und 10 l Carboxymethylcellulose-Lösung 2 Min. lang intensiv vermengt. Die Glasur-Rohmischung bestand aus 30% $SiO_2$, 30% Kalifeldspat, 15% Kalziumcarbonat, 5% Kalziumsilikat, 17% Kaolin und 2,5% Ton, in einer Körnung von kleiner als 60 Micron. Die Schüttdichte dieser Glasur-Rohmischung betrug 1,5 kg/l. Die Mischung aus Hohlkugelkorund, Rohglasur und Carboxymethylcellulose hatte eine trockene Konsistenz. Ein Teil dieser Mischung wurde in vorbereitete Metallrahmen der Grösse 30 x 30 x 5 cm mit abgeschrägten Wänden eingerüttelt und oberflächlich mit einer Metallrolle geglättet. Die Metallrahmen wurden sodann mit samt dem keramischen Gut in einen elektrischen Trockenofen gesetzt und 24 Stunden bei 80 - 100°C getrocknet. Nach der Trocknung liess sich das keramische Gut entfernen und wies selbsttragende Konsistenz mit guter Kantenfestigkeit auf.

Die Rohfilter wurden anschliessend in einen Elektroofen gesetzt und auf maximal 1280°C gebrannt. Die Haltezeit betrug 10 Min., die Aufheiz- und Kühlgeschwindigkeit betrugen ca. 100°C pro Std. - die lineare Schwindung betrug 0%.

Die gebrannten Filter wiesen folgende Merkmale auf:

Farbe: weiss

Volumen: 4,3 l

Gewicht: 3,0 kg

Raumgewicht: 0,7 kg/l

Permeabilität, gemessen nach DIN 51 058: 14 - 16 Microperm

Biegefestigkeit, gemessen an 15 Probestäben von 25 x 25 x 100 mm mit Auflageradius 14 mm, Auflageabstand 50 mm, bestimmt nach der Dreipunktmethode: $230 \pm 50$ N/cm$^2$

Kaltdruckfestigkeit: $410 \pm 50$ N/cm$^2$

Kantenfestigkeit: gut

Ein in der beschriebenen Weise hergestellter Filter wurde in einem vorbereiteten Filtertrog, wie er in CH-PS 622 230 beschrieben ist, eingesetzt und mit direkter Gasflamme auf etwa 400°C vorgewärmt. Eine Aluminiumlegierung mit der Bezeichnung AlMg 0,4 Si 1,2 wurde nun in einer Durchflussmenge von 75 kg/Min. aufgegeben. Die Metalltemperatur betrug 700°C. Die Metallhöhe über der Filterplatte betrug 400 mm, die Niveaudifferenz von Ein- und Auslauf am Anfang des Gusses 20, am Ende 27 mm. Die Metallhöhe über einem Filter nach US-PS 3 524 548 innerhalb eines Vergleichsversuches betrug 600 mm, die Niveaudifferenz am Anfang 30 mm, am Ende 40 mm.

Insgesamt wurden 12 t Metall in Walzbarren des Formates 318 x 1250 x 3100 mm gegossen. Dies geschah durch drei Abgüsse über eine erfindungsgemässe Filterplatte. Zwischen den Abgüssen wurde das Filter durch Flammenbeheizung auf Temperatur gehalten.

Nach Ende des Gusses wurde das mit Metall beladene Filter entformt und nach Abkühlung zerschnitten und metallographisch untersucht. Dabei zeigte sich, dass die Verunreinigungen in Form von Magnesium-Aluminium-Oxiden durch den ganzen Filter hindurch vornehmlich in den Bereichen zwischen den aneinanderstossenden Kugeln oder im Inneren der Hohlkugeln, sowie in der obersten Zone der Filterplatte abgesetzt waren. Das als Kornfeinungsmittel zugegebene Titandiborid konnte als an der Oberfläche der Kugeln angelagert festgestellt werden. An diesem Filter wurde die Raumerfüllung des Aluminiums bestimmt, um ein Mass für die homogene Durchdringung des Filters durch das Metall zu erhalten. Die Raumerfüllung des Aluminiums nach Korrektur für den vom Filtermaterial selbst eingenommenen Volumenanteil, aber ohne Berücksichtigung des dem Aluminium nicht zugänglichen Anteils an Hohlkugeln, wurde zu 82% bestimmt. Im Vergleich dazu wurde der Raumerfüllungsgrad eines Filters nach CH-PS 622 230 mit einer Porengrösse analog 40 ppi (pores per inch) zu 55% bestimmt.

Patentansprüche

1. Filtermedium in Form eines stabilen porösen Körpers aus gegenseitig gebundenen Körnern eines feuerfesten Materials,

dadurch gekennzeichnet,

dass das Filtermedium eine durchströmbare Porosität von 5 bis 45 Vol.-% und eine Permeabilität von 2 bis 200 µPm aufweist, dass die Körner aus feuerfestem Material eine kugelige Gestalt mit einem mittleren Durchmesser von 0,1 bis 30 mm aufweisen und die kugeligen Körner derart fest gebunden sind, dass eine Verbindungsstelle zwischen zwei Körnern 0,1 bis 15% der jeweiligen Kugeloberfläche beansprucht.

2. Filtermedium nach Anspruch 1, dadurch gekennzeichnet, dass das Filtermedium eine durchströmbare Porosität von 20 bis 40 Vol.-%, vorzugsweise von 20 bis 35 Vol.-%, und eine Permeabilität von 2 bis 50 µPm, vorzugsweise von 10 bis 30 µPm aufweist, dass die Körner aus feuerfestem Material einen mittleren Durchmesser von 0,1 bis 10 mm, vorzugsweise von 0,5 bis 8 mm aufweisen, und dass eine Verbindungsstelle der Körner 0,1 bis 5%, vorzugsweise 0,5 bis 1,5% der jeweiligen Kugeloberfläche beansprucht.

3. Filtermedium nach Ansprüchen 1 und 2, dadurch gekennzeichnet, dass das feuerfeste Material eine kugelige Gestalt aufweist, hohl ist und einen mittleren Durchmesser von 0,5 bis 8,0 mm aufweist.

4. Filtermedium nach Ansprüchen 1 bis 3, dadurch gekennzeichnet, dass die Körner aus feuerfestem Material Aluminiumoxid, vorzugsweise Korund, Bauxit, Zirkonoxid oder Spinelle enthalten.

5. Filtermedium nach Ansprüchen 1 bis 4, dadurch gekennzeichnet, dass die Körner selbstgebunden oder fremdgebunden durch einen anorganischen Binder sind.

6. Filtermedium nach Ansprüchen 1 bis 5, dadurch gekennzeichnet, dass die freie Kornoberfläche mit aktiviertem Aluminiumoxid beschichtet ist, wobei das aktivierte Aluminiumoxid 3 bis 40 Gew.-% des gesamten Filtermediums beträgt und die spezifische BET-Oberfläche mindestens 10 m$^2$/g beträgt.

7. Filtermediun nach Ansprüchen 1 bis 6, dadurch gekennzeichnet, dass die freie Kornoberfläche mit 0,5 bis 10 Gew.-%, bezogen auf Gewicht des gesamten Filtermediums, eines Flussmittels für Metalle überzogen ist.

8. Filtermedium nach Ansprüchen 1 bis 7, dadurch gekennzeichnet, dass im feuerfesten Material oder auf der Kornoberfläche keramische Fasern in Mengen von 0,01 bis 10 Gew.-%, vorzugsweise 0,1 bis 5 Gew.-%, bezogen auf die Menge feuerfesten Materials, enthalten sind, und die keramischen Fasern mit wenigstens einem ihrer Faserenden über die Kornoberfläche herausragen.

9. Filtermedium nach Ansprüchen 1 bis 8, dadurch gekennzeichnet, dass die freie Kornoberfläche mit Kohlenstoff beschichtet ist, wobei der Kohlenstoff 3 bis 40 Gew.-% des gesamten Filtermediums beträgt.

10. Filtermedium nach Ansprüchen 1 bis 9, dadurch gekennzeichnet, dass das Filtermedium in Filtrationsrichtung eine Abstufung des mittleren Durchmessers der Körner von fein nach grob aufweist.

11. Filtermedium nach Ansprüchen 1 bis 9, dadurch gekennzeichnet, dass das Filtermedium in Filtrationsrichtung eine Abstufung des mittleren Durchmessers der Körner von grob nach fein aufweist.

12. Filtermedium nach Ansprüchen 1 bis 9, dadurch gekennzeichnet, dass das Filtermedium senkrecht zur Filtrationsrichtung eine Abstufung des mittleren Durchmessers der Körner von grob nach fein aufweist.

13. Filtermedium nach Ansprüchen 1 bis 9, dadurch gekennzeichnet, dass das Filtermedium senkrecht zur Filtrationsrichtung eine Abstufung des mittleren Durchmessers der Körner von fein nach grob aufweist.

14. Verwendung des Filtermediums nach Anspruch 1 bis 13 zum Entfernen von Verunreinigungen aus schmelzflüssigem Metall.

15. Verwendung des Filtermediums nach Ansprüchen 1 bis 13
zum Entfernen von Verunreinigungen aus schmelzflüssigen
Nichteisen-Metallen, vorzugsweise Aluminium.

16. Verwendung des Filtermediums nach Ansprüchen 1 bis 13
zum Entfernen von Verunreinigungen aus schmelzflüssigen
Eisenmetallen.